# EUROPEAN PATENT APPLICATION

(11) **EP 2 306 683 A1**
(43) Date of publication of application: **06.04.2011**
(21) Application number: 09305918.6
(22) Date of filing: 30.09.2009
(51) Int. Cl.: H04L 29/06, H04L 29/08

(54) **Method of and apparatus for managing contact data**

(71) Applicant: FRANCE TELECOM, 75015 Paris (FR)
(72) Inventor: Prokopi, Maria, RICHMOND, Surrey TW10 6PQ (GB); Tran, Neil, LONDON, NW1 8AW (GB)
(74) Representative: Cabinet Plasseraud

(57) **Abstract**

A method of managing contact information in a network, the method comprising: connecting to a user account on a network site, the network site having contact information of contacts associated with the user; retrieving contact data from the network site by means of a widget supported on an intermediate platform on the network; aggregating the contact data in a portable contact listing supported on the intermediate platform; and allowing access by the user to the portable contact listing.

## Description

### Field of the Invention

The present invention relates in general to a method and apparatus for managing contact information in a communication network.

### Background of the Invention

With the increasing use of social networking applications such as, but not limited to, Facebook, Twitter, Linked In, MySpace, Bebo Hi5 etc and the proliferation of communication methods such as email, instant messaging applications, SMS/MMS and voice messaging, the management of contact information is becoming more and more time consuming and tedious. If a user joins up to a number of networking sites or email providers for example he has to input contact information of contacts such as acquaintances and or business contacts for each networking site. Many users have multiple contact lists associated with multiple networking sites or email providers. Some applications such as social network applications allow people to share different information including photographs, videos, personal information rendering the management of information more complex. Contact information may include, for example, the names, aliases, telephone numbers, e-mail addresses, IM addresses, home addresses, and web addresses of a contact. Contact information can also refer to other types of information such as a birthday, real time status, location or disposition of a contact, as well as the shared data mentioned above.

Some known services such as network address books (Openwave, Voxmobili) are designed to synchronise contacts between a number of devices. Such services enable users to save and synchronise contact information from one device to another device and support automatic backup and synchronisation of all changes. The main technology behind such services makes use of SyncML protocol to synchronise information with a server. It supports SIM card backup, integration with Outlook, as well as integration with billing and location services and has extensive data replication/backup/restore management. However such services are limited in general to the sharing of email addresses and sharing between devices. The contact data cannot be accessed by third parties such as friends or social graph providers.

Typically when a user joins a new networking site, contacts already existing on another application such as web based email accounts to which the user is registered are contacted and invited to join the networking site by a method commonly referred to as contacts scrapping. A drawback of such a method is often that the user has limited control over who in the contact list is contacted by the networking site and the sending of invitations to join the site.

### Summary of the Invention

To better address one or more of the foregoing concerns, a first aspect of the invention provides a method of managing contact information in a network, the method comprising: connecting to a user account on a network site, the network site having contact information of contacts associated with the user; retrieving contact data from the network site by means of a widget supported on an intermediate platform on the network aggregating the contact data in a portable contact listing supported on the intermediate platform; and allowing access by the user to the portable contact listing.

A second aspect of the invention provides a contact data management module comprising: an interface for connecting to a user account on a network site, the network site having contact information of contacts associated with the use, a data extractor for retrieving contact data from the network site; a data aggregator for aggregating the contact data in a portable contact listing supported on an intermediate network platform; and a user interface for allowing access by the user to the portable contact listing. The module may be in the form of a widget.

In embodiments of the invention the method or the apparatus may include one or more of the following features:
■ the contact data may be retrieved from the network site using the network site application interface (API) by means of a http request.
■ the contact data listing is saved in microformat
■ the contact data is hosted as a web application. The contact data is viewable by means of a web interface
■ the contact data is accessible outside the network service from where it was exported or to where it is imported
■ the contact data is saved in a user editable format
■ contact data from the portable contact data listing can be imported to a network site by means of a copy and paste manipulation
■ a user can send a communication directly to a contact on the portable contact listing without using the social network sites with which he has an account
■ contact data from the contact listing can be exported to a XML format which can be saved on a web server
■ the method can further include importing contact data from the portable contact data listing to a further network site to populate the address book of the further network site
■ the method can further include determining registered contacts from the contact data who are registered on the network site and informing the user of the said registered contacts
■ the method can further include determining unregistered contacts in the portable contact data listing who are not registered at the site and transmitting an invitation to join the network site to said unregistered contacts.
■ the method can further include enabling a third party access contact data of the portable contact data listing and retrieving authorised contact data from the contact data
■ the method can further include inputting contact data and transforming the data to XFN format to aggregate the input contact data with the portable contact data listing.

The methods according to the invention may be computer implemented. The methods may be implemented in software on a programmable apparatus. They may also be implemented solely in hardware or in software, or in a combination thereof.

Since the present invention can be implemented in software, the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

### Brief Description of the Drawings

Embodiments of the invention will now be described, by way of example only, and with reference to the following drawings in which:-
Figure 1 is a schematic block diagram of a system for managing contact data according to at least one embodiment of the invention;
Figure 2 is a schematic diagram of the network architecture of a system for managing contact data according to at least one embodiment of the invention;
Figure 3A to 3C are sequential diagrams of a method of retrieving contact data according to an embodiment of the invention; and
Figure 4A and B are sequential diagrams of a method of exploiting contact data according to an embodiment of the invention.

### Detailed description

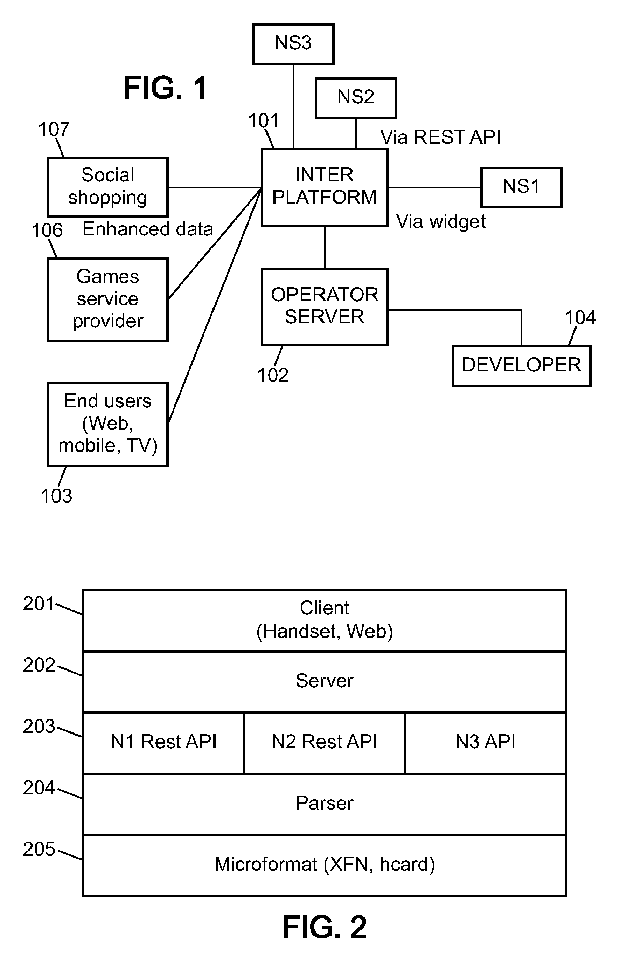

An embodiment of the invention will be described with reference to Figures 1 to 4.

Figure 1 is a schematic block diagram illustrating network system architecture of a non-limiting example of an apparatus for managing contact data according to an embodiment of the invention.

In the non-limiting example illustrated in Figure 1 an intermediary contact data aggregation platform 101 is supported by the server 102 of a network provider. By means of a communicational widget (window gadget e.g. a displayable user interface) the intermediary contact data aggregation platform 101 can connect to a social networking website such as, for example, Facebook, Google, MySpace or an email account application etc. In the embodiment of the invention the contact management method is implemented as an application run as a widget on a widget container platform.

In general a widget refers to at least part of a graphical user interface (GUI) that allows the user to interface with an application and operating system. Widgets can display information and invite the user to act in a number of ways. Typical widgets include buttons, dialog boxes, pop-up windows, pull-down menus, icons, scroll bars, resizable window edges, progress indicators, selection boxes, windows, tear-off menus, menu bars, toggle switches and forms. The term also refers to the program that is written in order to make the graphic widget in the GUI look and perform in a specified way, depending on what action the user takes while interfacing with the GUI. The term widget can be used to refer to either the graphic component or its controlling program or to refer to the combination of both. In the embodiment the widget can be a data object, a media object or a software object and the widget container is a procedural software framework containing a service module associated with the widget. In this embodiment the widget is an omniwidget since it can be copied and embedded on a website without downloading a library.

An end user at 103 interacts with the intermediary contact data aggregation platform 101 by a client widget embodied in a mobile phone, TV, personal computer etc. Alternatively the client widget application can be hosted on the intermediary platform 101 and viewed by a user interface on the client device.

The contact data aggregation platform 101 provides a decentralised contact storage method for contact data retrieved from a plurality of network websites NS1, NS2 and NS3. The platform 101 is used to aggregate data content retrieved from the networking website NS1. The contact data is retrieved and aggregated by the means of the contact data aggregation platform 101 and is independently externally accessible by the user at 103 without the need to pass through the network sites NS1, NS2 and NS3 from where the contact data was retrieved.

Since in some embodiments of the invention, portable social contact management is envisioned to be a communication tool linking to social networking sites, community sites (i.e. enabling users to view activities of contacts on a social network) and mobile operators, the operator server 102 can provide information on the presence, location, community sites etc.

The operator server 102 can provide further information to generate user's action/or alert a user. It can be configured to trigger an action or alert the user based on user contact information that is not stored inside the address book such as presence, location, community sites. For instance, some of the user's friend's birthdays are fast approaching and the portable contact system can be configured to send an SMS to the person to remind the person to buy gift for friends when they are in a shop). Alternatively, for example a right click on the contact can enablea pop out an alert or notification message.

Such contextual and dynamic information (presence and location) can help an operator to enhance activities with information specific to the operator's call logs. Thus the portable contact management system as well as acting as storage of social contacts it can help generate user's action on their behalf.

As the information is stored as web data on the operator server, portable contact can hep to provide unlimited contacts compared to contacts stored on the handset.

As illustrated in Figure 2 the portable contact data management system architecture consists of 5 layers. The first layer 201 is the client such as a user equipment UE, web browser or interactive television set box, for example, which is used to interact with the user. The client is provided with HTTP access to interface the portable contact system. The widget application for retrieving and aggregating data may be embedded on a handset or accessible via the network provider server.

For each access (for example, by mobile telephone or web), there are corresponding servers on a second layer 202 which are responsible for parsing the information received. This second layer also forms the application layer in which the application server will provide a run time support for web services and presentation support (Java server faces or JSP) to the administrator.

The third layer 203 is the application interface API of the networking website NS1, NS2 or NS3 such as, for example Facebook Rest API, or Igloo API.

The fourth layer 204 is the layer that parses the social data and stores the contact information retrieved from the network websites NS1, NS2 and NS3 in the proper format.

The last layer 205 is the data layer corresponding to the format of data storage that stores information.

In embodiments of the invention the contact data retrieved from the network websites NS1, NS2 and NS3 and aggregated is recorded in microformat for example XFN, hcard. It will be appreciated that other data formats may also be used. XFN (XHTML Friends Network) can represent human relationships using hyperlinks and use the element's relationship attribute to identify the relationships of a link. XFN styling with CCS (Cascading Style Sheet) can be used depending on contact relationships. hCard is a simple, open, distributed format for representing people, companies, organization using a 1:1 representation of vCard (RFC2426) properties and values in semantic HTML or XHTML. hcard can be used to capture the profile of a person and XFN can be used to capture the social graph on the web page. The web pages act as proxies for the users and their contacts. It is thus easier for other services like Google social graph or social graph provider to discover the contact relationships or to aggregate all the contact links.

The benefits of using microformat (XFN and Hcard) are that it is very simple to use and can be written to a webpage or converted to RDF seamlessly. Contact data including a user profile and contact relationships can be recorded on a web page. If for example the contact data is written using a microformat such as XFN (**X**HTML **F**riends **N**etwork) it may be embedded on a user's webpage or a blog roll. Such a webpage made be made secure with a security restriction. Search engines can recognise the XFN formatted data and map relationships between the links. This can then be used to construct a social map of related people's websites. It opens up the possibility for other services or modules to aggregate all the links posted on a website and map out user relationships.

Versions of microformat such as for example hcard provide a simple distributed data format representation of vcard properties and values in semantic HTML or XHTML The benefits of using microformat is that is a simple procedure enabling contact data to be aggregated on the web.

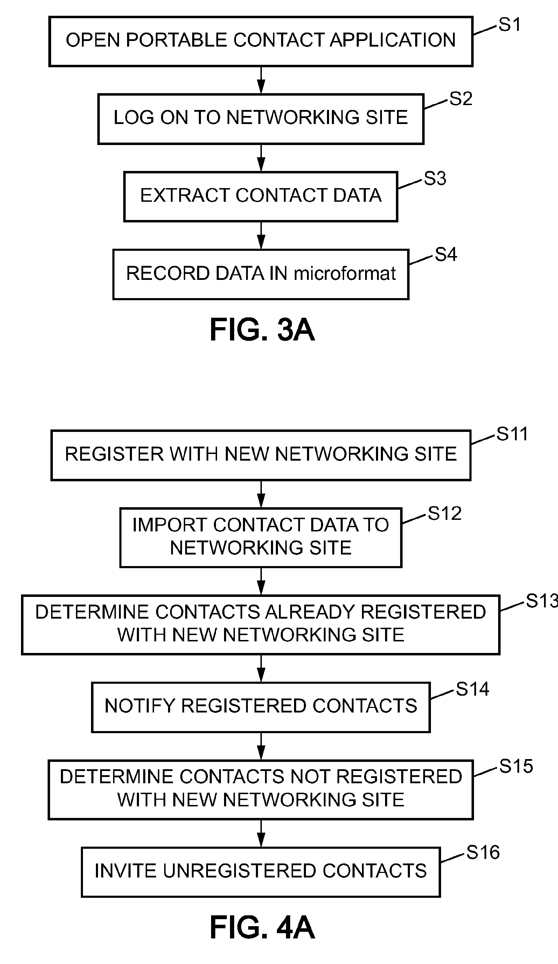

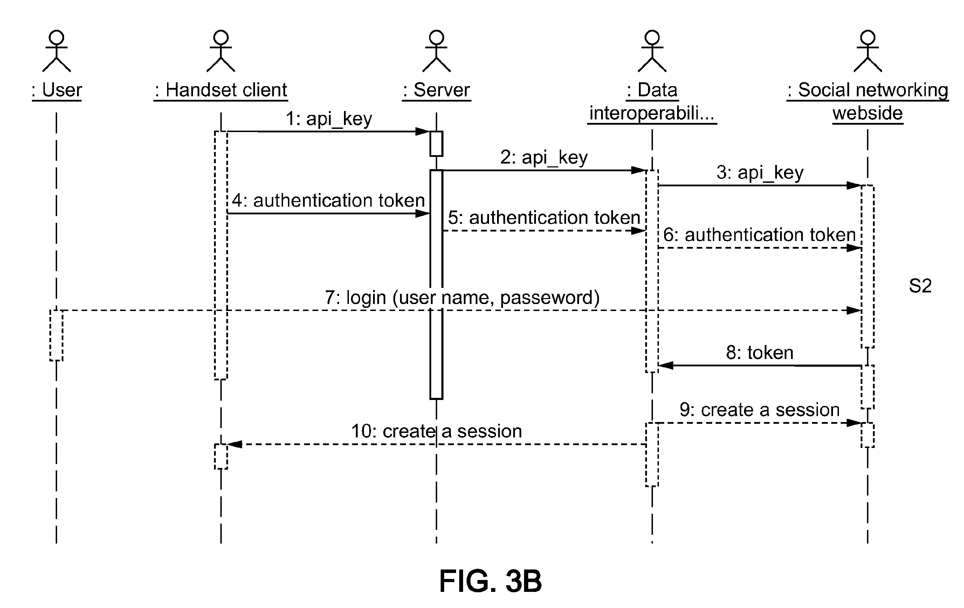

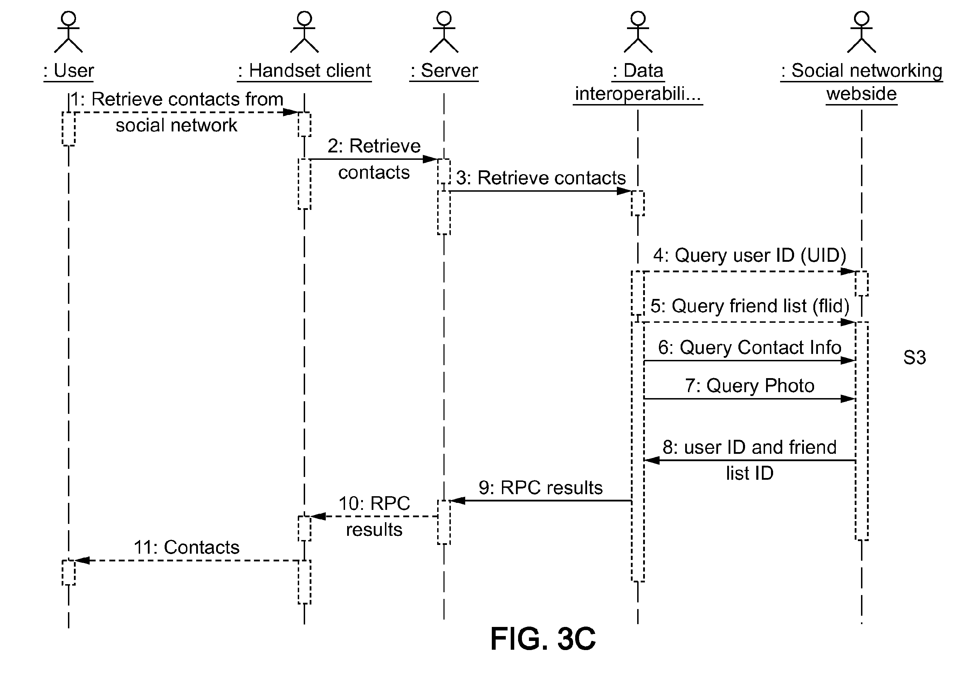

Figures 3A to 3C illustrate a method of contact management including the steps of retrieving contact data from a networking website NS1, NS2 or NS3 according to an embodiment of the invention. In this example the user has a widget embedded on his handset enabling contact data to be retrieved and aggregated. It will be appreciated that in alternative embodiments of the invention the user may use internet access by a computer or communication via interactive TV. The user has an account with a networking website NS1 and wishes to retrieve personal information and contact data.

The contact information that the user wishes to retrieve from the social network site may include, for example for each contact: an Email (work, home) address; Home postal address, Telephone number (work, home), date of birth, photos, videos etc.

In step S1 of the method of the first embodiment of the invention the user opens the contact management widget application on his handset and selects an option "retrieve contact data from networking site NS1" The contact management widget application then prompts the user to login to networking site NS1 and the user is directed to the website of the networking site NS1 and logs on to the networking site in step S2 using an internet browser interface. It will be appreciated that in some embodiments of the invention the contact management widget application may save the user login data for the various networking websites so that login may be carried out automatically. The method of contact management according to the embodiment of the invention can exploit the API authentication of the networking site to log the user onto the networking website.

The contact management application extracts the contact data in step S3 of the method. The application can make use of REST API (representational state transfer application interface) available on some networking sites. The data request to retrieve the contact data can be performed in the form of a HTTP request. The contact data can in some embodiments of the invention be retrieved automatically each time the user logs on to the networking site. The contact management application aggregates the contact data populating the portable contact list by matching existing contacts already in the contact data and updating changes in contact data. The data is managed in microformat to save a social graph of the contact data.

Contact data can be added, deleted or edited directly by the user. The changes can then be reflected in the networking sites NS1, NS2 and NS3 by exporting the contact data to the networking websites. Data input by the user can be converted into microformat so that it can be managed by the application.

Once all the profile information and contact data are retrieved from the networking site NS1 the users can view contact the contact data in folders or categories (such as by networking site, location etc) that allow him to see their name, email address, mobile numbers etc. The users can view the contacts on the web site, desktop or mobile phone. The contact data is accessible through a web interface.

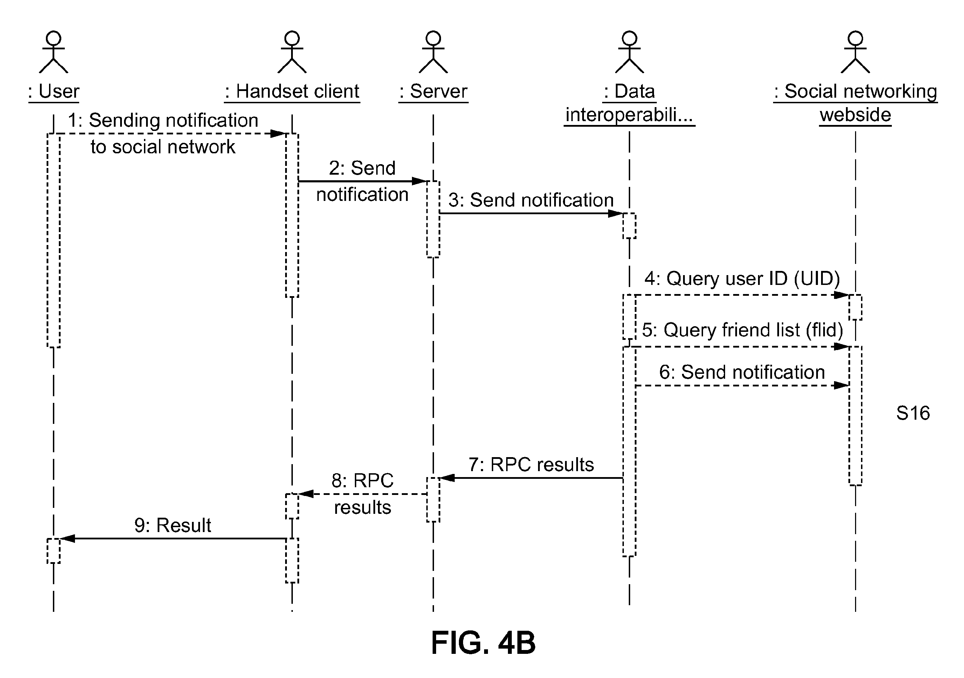

A method of exploiting the contact data according to an embodiment of the invention will now be described with reference to Figures 4A to 4B. The user may wish to connect to a second networking website NS2. The user is directed to the website of the networking service NS2 and logs on. Contact data can be exported from the aggregated contact list managed by the contact data management widget to the address book of the second networking site NS2 by means of copy and pasting.

Alternatively, the new social network service NS2 can exploit a portable contact management widget available on the network. This widget will prompt the user to enter an URL to direct to the information of a temporary user profile and social graph. The widget will parse the information.

The user may then wish to join a third networking website NS3. With reference to Figure 4A in step S11 by means of the contact management interface the user may register with the third network service using the usual registering procedure. Once the user has joined and logged on to the third network service NS3 he can export his contact data by means of the contact data management widget to the site in step S12. It may then be possible in step S13 to determine contacts of the portable contact list who are already registered at the third networking site NS3. The user can then be informed of these already registered contacts while the contacts who are already registered at the third networking site NS3 can be notified that the user is now a member of the site in step S14. In step S15 those contacts who are not registered at the third networking site NS3 can be determined. For those contacts of the contact data list who are not members of the third networking site NS3 an invitation may be sent to those contacts to invite them to join the site in step S16 informing them that a contact of theirs is a member of the networking site.

Friend discovery can thereby be automated when a user signs up for a new account at a network site. When the contact list managed by the contact data management widget has been exported to the networking website application, the application will have the possibility of informing the user of one or more of his contacts are already members of the site. The use of contact scrapping can therefore be avoided.

The procedure can be repeated to retrieve contact data from other networking websites or email application websites. The contact data retrieved from these websites is aggregated with the contact data already retrieved and aggregated.

Some networking applications do not allow the exporting of emails. In this case the user identification number assigned by the network site can be used for aggregating contact data.

The end users only need to export the contact data from the portable contact list if they need to import the social graph information to social graph providers.

The contact data management application can also be used to interact with existing contacts on the portable contact list independently of the network websites from which the contact data was retrieved, for example by sending text messages to contacts on the contact list.

The user may also export the contact data to an XML format that may be saved anywhere on the web. Services can import data to form social graph data.

Moreover if access to the portable contact listing is enabled the data can be uploaded to a third party website or a social graph provider. Third party services to providers can upload a widget from the intermediary platform to embed these widgets on their websites. Third party developers can upload a widget to a widget platform hub.

In embodiments of the invention data portability is achieved by exploiting APIs available from social networks to retrieve data from these networks and further by providing simple tagging language for end-users to describe their personal profiles and also relationships between people.

To support application portability, in embodiments of the invention the required applications can be converted (for example from Java, C++ or other programming languages to HTML format) and hosted as web applications on the operator network to be run as widgets on a intermediary container platform. The services can be accessible anywhere (mobile, web and TV) without the need to install an application library on the client side.

In previous approaches application portability was not achieved because different client types such as mobile, web and TV are written using different APIs in different programming languages. The system according to embodiments of the invention makes use of the server side widgets running in a container to simplify the access to use the services. Widgets still make use of the APIs of the service applications but they are hosted as web application on the server side. By copying and pasting the URL of the widgets, the widgets can be readily deployed. Since the widgets have simple implementation and limited functionalities they require less maintenance efforts

The embodiments of the invention provide a clean separation of data and functionalities. The contact data is pulled from social networks rather than storing it in another database. Such an approach leads to improved efficiency. The system is decentralized and does not need to implement a central database.

End-users can have control of the contact information. A service provider can copy the URL of these widgets and include them in their web pages. When the end-users use the services, they will allow these widgets to read the information about their profile in the social network. Widgets can read user information on the fly. It will be appreciated that different widgets can be created to have different business functionalities.

Portable contacts widgets of embodiments of the invention can be used to solve simple problems like auto form filling, avoiding contacts scrapping, eliminating the need of registration for joining new services and provide integrated communication. The following features may thus be provided

Aggregated contacts: contact data can be retrieved from multiple applications and aggregated together and made available for further applications.

Integrated communication: Enables messages to be forwarded from one social network to another system so that users can read messages anywhere outside social networking system

Auto filing: For mobile telephone users, because of the limited screen size of the phone, for services using this aggregation platform, user profiles can be auto-populated when filling in the registration forms for new services (if the services providers implement widgets provided by the portable contact aggregation platform).

No contacts scrapping: When users joining a new services, the portable contact widget application can notify all the contacts instead of services providers inviting all the contacts. The portable contact widget application can remove the need to create and maintain multiple contact lists for various user accounts

Zero registration: If the widgets are used and embedded on service providers web 1.0 sites. According to the functionality of the widget, on joining a new networking site an end user can just enter the URL of their "Personal profile web", the widget will parse the information and enable users to avoid repeating the cumbersome process of creating a profile and notifying the same friends to join the networking site.

With data portability and application portability, contact data can be aggregated and managed by the end-users. The end user can export their social information or their social information can be used by widgets used by third parties and auto populated when they used services on the web.

The methods according to the embodiments of the invention remove the need to create and maintain multiple contact lists for various user accounts. Moreover embodiments of the invention reduce the need to repeat the cumbersome process of creating a profile and inviting more or less the same group of friends to the website each time a user joins a new networking site.

Thus by virtue of the invention efforts for users with multiple social accounts can be minimized. Instead of logging into multiple accounts to make changes for example if contacts change their home address or their interests change over time as they grow older the user needs only do it once.

Embodiments of the invention provide better user control and ownership of contact data rendering the data portable outside the framework of an existing social network application.

It will be appreciated that methods according to embodiments of the invention can be implemented by a plurality of widgets which can communicate between one another by inter-widget communication, or by a single widget interacting with a server aggregating and managing the data.

Although the present invention has been described hereinabove with reference to specific embodiments, the present invention is not limited to the specific embodiments, and modifications will be apparent to a skilled person in the art which lie within the scope of the present invention.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

## Claims

1. A method of managing contact information in a network, the method comprising:
connecting to a user account on a network site, the network site having contact information of contacts associated with the user;
retrieving contact data from the network site by means of a widget application supported on an intermediate platform on the network ;
aggregating the contact data in a portable contact listing supported on the intermediate platform; and
allowing access by the user by means of a widget interface to the portable contact listing.

2. A method according to claim 1 wherein the portable contact data listing is saved in microformat

3. A method according to claim 1 or 2 wherein the contact data listing is hosted as a web application.

4. A method according to any one of the preceding claims wherein the contact data is accessible outside the network service from where it was exported or to where it is imported

5. A method according to any one of the preceding claims wherein contact data from the portable contact data listing can be imported to a network site by means of a copy and paste manipulation

6. A method according to any one of the preceding claims wherein a user can send a communication directly to a contact on the portable contact listing without using the social network sites with which he has an account

7. A method according to any one of the preceding claims further comprising:
importing contact data from the portable contact data listing to a further network site to populate the address book of the further network site;
determining registered contacts from the contact data who are registered on the network site; and
informing the user of the said registered contacts

8. A method according to claim 7 further comprising determining unregistered contacts in the portable contact data listing who are not registered at the site and transmitting an invitation to join the network site to said unregistered contacts.

9. A method according to any one of the preceding claims further enabling a third party access contact data of the portable contact data listing and retrieving authorised contact data from the contact data

10. A method according to any one of the preceding claims further comprising inputting contact data and transforming the data to XFN format to aggregate the input contact data with the portable contact data listing.

11. A method according to any one of the preceding claims further comprising the widget generating a user action or a user alert according to information collected on a network operator server supporting the intermediate platform.

12. A contact data management module comprising:
an interface for connecting to a user account on a network site, the network site having contact information of contacts associated with the user;
data retriever for retrieving contact data from the network site by;
data aggregator for aggregating the contact data in a portable contact listing supported on an intermediate network platform; and
an interactive graphical user interface for allowing access by the user to the portable contact listing.

13. A contact data management module according to claim 12 wherein the portable contact data listing is saved in microformat

14. A contact data management module according to claim 12 or 13 wherein the contact data listing is hosted as a web application.

15. A wireless communication device comprising:
an antenna and a transceiver for communicating with a network entity; a contact data management module according to any one of claims 12 to 14.
